# EUROPÄISCHE PATENTSCHRIFT

(11) **EP 2 210 225 B1**
(45) Veröffentlichungstag und Bekanntmachung des Hinweises auf die Patenterteilung: **06.05.2015**
(21) Anmeldenummer: 08849925.6
(22) Anmeldetag: 04.11.2008
(51) Int. Cl.: G06K 19/06, G06K 19/077, B60R 13/10, G07D 7/02, G07D 7/12

(54) **DOKUMENT MIT EINER INTEGRIERTEN ANZEIGEVORRICHTUNG, VERFAHREN ZUR HERSTELLUNG EINES DOKUMENTS UND LESEGERÄT**
DOCUMENT WITH INTEGRATED DISPLAY DEVICE AND METHOD FOR PRODUCING A DOCUMENT AND READING DEVICE
DOCUMENT AVEC UN DISPOSITIF D'AFFICHAGE INTÉGRÉ, PROCÉDÉ DE FABRICATION D'UN DOCUMENT, ET APPAREIL DE LECTURE

(30) Priorität: 12.11.2007 DE 102007000881
(43) Veröffentlichungstag der Anmeldung: 28.07.2010
(60) Teilanmeldung: 14188544.2
(73) Patentinhaber: Bundesdruckerei GmbH, 10958 Berlin (DE)
(72) Erfinder: HOPPE, Andreas, 12683 Berlin (DE); MATHEA, Arthur, 14199 Berlin (DE); FRITZE, Frank, 12487 Berlin (DE); FISCHER, Jörg, 13053 Berlin (DE); PAESCHKE, Manfred, 16348 Wandlitz (DE); PFLUGHOEFFT, Malte, 13347 Berlin (DE)
(74) Vertreter: Richardt Patentanwälte PartG mbB
(86) Internationale Anmeldenummer: PCT/EP2008/064917
(87) Internationale Veröffentlichungsnummer: WO 2009/062860

(56) Entgegenhaltungen:
- WO-A-2004/086315
- WO-A-2005/082671
- WO-A-2006/029857
- DE-U1- 20 200 358
- US-A- 5 619 025

## Beschreibung

Die Erfindung betrifft ein Dokument mit einer integrierten Anzeigevorrichtung, insbesondere ein Wert- oder Sicherheitsdokument.

Dokumente mit einer integrierten elektronischen Schaltung sind aus dem Stand der Technik an sich in verschiedener Form bekannt. Beispielsweise gibt es Wert- und Sicherheitsdokumente in überwiegend papierbasierter Form, wie zum Beispiel als Banknote, als elektronischer Reisepass, oder als kunststoffbasierte Chipkarte, insbesondere als sogenannte Smart Card, in kontaktbehafteter, kontaktloser oder Dual-Interface Ausführung. Hierzu wird insbesondere auf die DE 10 2005 025 806 verwiesen.

Insbesondere sind verschiedene Funk-Erkennungssysteme für solche Dokumente aus dem Stand der Technik bekannt, die auch als Radio Frequency Identification (RFID) Systeme bezeichnet werden. Vorbekannte RFID-Systeme beinhalten im Allgemeinen zumindest einen Transponder und eine Sende-Empfangseinheit. Der Transponder wird auch als RFID-Etikett, RFID-Chip, RFID-Tag, RFID-Label oder Funketikett bezeichnet; die Sende-Empfangseinheit wird auch als Lesegerät, Leseeinrichtung oder Reader bezeichnet. Ferner ist oft die Integration mit Servern, Diensten und sonstigen Systemen, wie zum Beispiel Kassensystemen oder Warenwirtschaftssystemen über eine so genannte Middle Ware vorgesehen.

Ein RFID-Transponder beinhaltet üblicherweise einen Mikrochip und eine Antenne, die in einem Träger oder Gehäuse untergebracht oder auf ein Substrat aufgedruckt sind. Aktive RFID-Transponder verfügen im Gegensatz zu passiven Transpondern ferner über eine Energiequelle, wie zum Beispiel eine Batterie.

RFID-Transponder sind für verschiedene Dokumente einsetzbar, insbesondere in Chipkarten, beispielsweise zur Realisierung einer elektronischen Geldbörse oder für Electronic Ticketing. Desweiteren werden diese in Papier oder Kunststoff, wie zum Beispiel in Wert- und Sicherheitsdokumenten, insbesondere Geldscheinen und Ausweisdokumenten, integriert.

Aus der DE 201 00 158 U1 ist beispielsweise eine Identifikations- und Sicherheitskarte aus laminierten und / oder gespritzten Kunststoffen bekannt, die einen integrierten Halbleiter mit einer Antenne zur Durchführung eines RFID-Verfahrens beinhaltet. Aus der DE 10 2004 008 841 A1 ist ferner ein buchartiges Wertdokument, wie zum Beispiel ein Passbuch bekannt geworden, welches eine Transpondereinheit beinhaltet.

Solche Sicherheits- oder Wertdokumente können eine integrierte Anzeigevorrichtung aufweisen, wie es z.B. aus DE 10 2005 030 626 A1, DE 10 2005 030 627 A1, DE 10 2005 030 628 A1, WO 2004/080100 A1, EP 1 023 692 B1, DE 102 15 398 B4, EP 1 173 825 B1, EP 1 230 617 B1, EP 1 303 835 B1, EP 1 537 528 B1, WO 03/030096 A1, EP 0 920 675 B1, US 6,019,284, US 6,402,039 B1, WO 99/38117 bekannt ist.

Aus dem Stand der Technik sind insbesondere bereits Chipkarten mit integrierter Anzeigevorrichtung bekannt. Die US 6,068,183 zeigt ein Chipkartensystem, das eine Anzeigevorrichtung zur Wiedergabe von Werbeinformationen aufweist, wobei die Chipkarte die Werbeinformationen von einer Datenquelle empfangen kann.

Sicherheits- oder Wertdokumente können mit einer kontaktbehafteten oder kontaktlosen Schnittstelle, beispielsweise einem RFID-Interface, ausgestattet sein oder mit einer Schnittstelle, die sowohl eine drahtgebundene als auch eine drahtlose Kommunikation mit einem Chipkarten-Terminal zulässt. Im letzteren Fall spricht man auch von so genannten Dual-Interface Chipkarten. Chipkarten-Kommunikationsprotokolle und -verfahren sind zum Beispiel in der Norm ISO 14443 festgelegt.

Ein Nachteil solcher Dokumente mit RFID-Funktionalität ist, dass ohne Einverständnis des Trägers des Dokuments die RFID-Schnittstelle angesprochen werden kann. Ein Schutzmechanismus für Reisedokumente zum Schutz gegen unbefugtes Auslesen der Daten aus einem solchen Dokument ist als "Basic Access Control" bekannt, vgl. hierzu "Machine Readable Travel Document", Technical Report, PKI for Machine Readable Travel Documents Offering ICC Read-Only Access, Version 1.1, Oktober 01, 2004, International Civil Aviation Organisation (ICAO)
Ein Verfahren für den besonderen Schutz biometrischer Daten, d.h. die sog. Extended Access Control, ist beispielsweise aus der oben bereits genannten DE 10 2005 025 806 bekannt.

Aus der zum Anmeldezeitpunkt unveröffentlichten Patentanmeldung DE 10 2006 031 422.0-53 derselben Anmelderin ist ein Wert- oder Sicherheitsdokument mit einer Anzeigevorrichtung zur Ausgabe eines maschinenlesbaren optischen Signals, welches durch einen Benutzer nicht kognitiv erfassbar ist, bekannt.

Aus WO 2007/137555 A2 ist ein elektronisch konfigurierbares Kraftfahrzeug-Kennzeichen mit einem Display bekannt. Um das Kraftfahrzeug-Kennzeichen zu konfigurieren, werden Daten in einer externen Konfigurationseinheit zusammengestellt und verschlüsselt. Die verschlüsselten Daten werden von einem in die Konfigurationseinheit integrierten Infrarot-Sender als Infrarot-Signale ausgesendet. In der Anzeigeelektronik für das Kraftfahrzeug-Kennzeichen werden die Signale entschlüsselt, wofür eine entsprechende Entschlüsselungs-Software in der Anzeigeelektronik gespeichert ist. Weitere elektronische Kraftfahrzeug-Kennzeichen sind bekannt aus US 5,657,008 und US 2007/0285361 A1.

Aus WO 2004/086315 A1, das als nächstliegender Stand der Technik gesehen wird, ist ein Werterzeugnis in Form einer Banknote bekannt, das ein Sicherheitsmerkmal aufweist, welches lichtemittierende Dioden enthält. Eine Teilmenge dieser Dioden ist irreversibel deaktiviert, um eine Information einzubringen.

Aus DE 202 00 358 U1 ist ein Wert- oder Sicherheitsdokument mit LED-Elementen bekannt sowie ein System zur Überprüfung eines Sicherheitsmerkmals. In eine LED-Matrix des Dokuments sind durch Personalisierung biometrische Merkmale abgebildet. Diese biometrischen Merkmale werden durch ein Kamerasystem erfasst und zur Intensitätsprüfung einer Person mit Referenzdaten verglichen.

Aus WO 2006/029857 A2 ist ein Anzeigenelement mit einem Schichtaufbau bekannt, bei dem unterschiedlich gefärbte und unterschiedlich geladene Teilchen beweglich zwischen zwei Elektrodenschichten angeordnet sind.

Aus WO 2005/082671 A2 ist ein drahtloses elektronisches Kraftfahrzeugkennzeichen bekannt.

Der Erfindung liegt demgegenüber die Aufgabe zugrunde, ein verbessertes Dokument mit einer integrierten Anzeigevorrichtung zu schaffen.

Die der Erfindung zugrunde liegende Aufgabe wird mit den Merkmalen das unabhängigen Patentanspruchs gelöst. Ausführungsformen der Erfindung sind in den abhängigen Patentansprüchen angegeben.

Nach Ausführungsformen der Erfindung wird ein Dokument mit einer integrierten Anzeigevorrichtung geschaffen.

Unter einem "Dokument" werden erfindungsgemäß Papier basierte und/oder Kunststoff basierte Dokumente verstanden, wie zum Beispiel Ausweisdokumente, insbesondere Reisepässe, Personalausweise, Visa, Führerscheine, Fahrzeugscheine, Fahrzeugbriefe, Firmenausweise oder andere ID-Dokumente, sowie auch Chipkarten, Zahlungsmittel, insbesondere Bankkarten und Kreditkarten, Frachtbriefe oder sonstige Berechtigungsnachweise.

Unter einem "Dokument" wird auch ein elektronisches Kennzeichen, insbesondere ein elektronisches Kraftfahrzeugkennzeichen, verstanden. Das Dokument kann auch einen integralen Bestandteil eines Transportmittels, insbesondere eines Kraftfahrzeugs, bilden. Beispielsweise kann das Dokument in die Front- bzw. Heckhaube bzw. in das sog. Frontend oder Backend integriert sein, indem dort ein Display erfindungsgemäß eingebracht oder aufgebracht wird.

Das Dokument kann auch metallbasiert sein, insbesondere blechbasiert; es kann also einen Dokumentenkörper aus Blech haben. Es kann aber auch ein Dokumentenkörper aus einem anderen Material haben, wie z.B. aus einem Verbundmaterial, wie er im Fahrzeugbau verwendet wird.

Bei der in das Dokument integrierten Anzeigevorrichtung kann es sich z.B. um ein Aktiv- oder Passiv-Matrix-Display handeln. Insbesondere kann es sich bei der Anzeigevorrichtung um eine elektrophoretische oder elektrochrome Anzeige, eine bistabile Anzeige, eine Drehelementanzeige, insbesondere sog. elektronisches Papier ("E-Paper"), eine LED-Anzeige, insbesondere eine anorganische, organische oder Hybrid-LED-Anzeige, eine LCD-Anzeige in verschiedenen Ausführungsformen (zum Beispiel Twisted Nematic, Super Twisted Nematic, cholesterisch, nematisch), eine ferroelektrische Anzeige, eine Anzeige auf der Basis des Elektrowetting-Effekts, eine Anzeige auf Basis interferometrischer Modulatorelemente (IMOD), eine Hybridanzeige oder eine Anzeige auf Basis eines flexiblen Displays, wie sie beispielsweise von der Firma Citala (www.citala.com) kommerziell erhältlich ist (vergleiche US 2006/0250535 A1 und WO 2007/054944), handeln.

Die Anzeigevorrichtung hat beispielsweise eine Matrix prinzipiell gleich aufgebauter ansteuerbarer Anzeigeelemente. Bei einer monochromen Ausführung der Anzeigevorrichtung kann jedes der Anzeigeelemente einem Bildelement, das heißt einem so genannten Pixel, der Anzeigevorrichtung entsprechen. Für eine farbliche Wiedergabe kann die Anzeigevorrichtung so ausgebildet sein, dass beispielsweise jeweils drei nebeneinander angeordnete verschiedenfarbige Anzeigeelemente ein solches Bildelement konstituieren.

Die Anzeigevorrichtung beinhaltet eine erste Teilmenge von Anzeigeelementen, wobei jedes Anzeigeelement der ersten Teilmenge bei einer vorgegebenen Ansteuerung eine erste Intensität aufweist. Wird also ein solches Anzeigeelement der ersten Teilmenge mit einem vorgegebenen Strom oder einer vorgegebenen Spannung beispielsweise von einer Treiberschaltung angesteuert, so resultiert daraus die erste Intensität.

Unter "Intensität" wird hier bei einer emissiven Ausbildung der Anzeigevorrichtung die intensität der von dem Anzeigeelement erzeugten Strahlung verstanden. Bei einer reflektiven Ausbildung der Anzeigevorrichtung wird dagegen unter "Intensität" die Absorptivität eines Anzeigeelements verstanden, da das Anzeigeelement umso deutlicher erscheint, je höher der Anteil der einfallenden Strahlung ist, die von dem Anzeigeelement absorbiert wird.

Die Anzeigevorrichtung hat ferner Anzeigeelemente einer zweiten Teilmenge. Die Anzeigeelemente der zweiten Teilmenge unterscheiden sich von den Anzeigeelementen der ersten Teilmenge dadurch, dass sie bei derselben vorgegebenen Ansteuerung eine zweite Intensität haben, die geringer als die erste Intensität ist. Diese Reduzierung der Intensität kann dadurch bedingt sein, dass sie Anzeigeelemente der zweiten Teilmenge beispielsweise anlässlich einer Individualisierung oder Personalisierung der Anzeigevorrichtung einem Alterungsvorgang unterworfen worden sind.

Bei einer emissiven Ausbildung der Anzeigevorrichtung kann dadurch die Effizienz der einzelnen Anzeigeelemente reduziert werden, so dass bei gleicher Ansteuerung eine geringere Intensität der Strahlung resultiert. Bei einer reflektiven Ausbildung der Anzeigevorrichtung absorbieren dagegen die Anzeigeelemente der zweiten Teilmenge, die einem Alterungsvorgang unterworfen worden sind, einen geringeren Anteil der einfallenden Strahlung, so dass der Kontrast reduziert ist.

Durch die Anordnung der Anzeigeelemente der ersten und/oder der zweiten Teilmenge ist eine Information in der Anzeigevorrichtung codiert. Beispielsweise ist die Anzahl der Anzeigeelemente der zweiten Teilmenge wesentlich geringer als die Anzahl der Anzeigeelemente der ersten Teilmenge. Die Anzeigeelemente der zweiten Teilmenge sind dann beispielsweise so angeordnet, dass deren Anordnung ein Muster bildet, welches die Information trägt.

Wenn die Anzeigeelemente der Anzeigevorrichtung alle gleich angesteuert werden, so wird dieses Muster auf der Anzeigevorrichtung wiedergegeben, da die zweiten Anzeigeelemente der zweiten Teilmenge eine geringere Intensität aufweisen als die der ersten Teilmenge. Dieser Intensitätsunterschied kann visuell durch einen Benutzer wahrnehmbar sein; der Intensitätsunterschied kann auch so gering gewählt sein, dass eine visuelle Wahrnehmung nicht möglich ist, sondern dass Muster nur aufgrund einer maschinellen Sensierung der Wiedergabe der Anzeigevorrichtung erfasst werden kann.

Nach Ausführungsformen der Erfindung hat das Dokument einen elektronischen Speicher zur Speicherung von Bilddaten. Unter "Bilddaten" werden hier alle Daten verstanden, die zur Erzeugung einer Bildwiedergabe auf der Anzeigevorrichtung geeignet sind, das heißt beispielsweise digitale Bildaufnahmen, insbesondere Gesichtsbilder einer Person, Wappen, Siegel, textuelle Angaben, Kennzeichen, insbesondere Kraftfahrzeugkennzeichen, Barcodes und dergleichen.

Das Dokument hat einen integrierten elektronischen Schaltkreis, der auf die Bilddaten zugreift, und die Anzeigevorrichtung zur Wiedergabe der Bilddaten ansteuert. Die Ansteuerung der Anzeigevorrichtung durch den elektronischen Schaltkreis berücksichtigt dabei nicht, dass die zweite Teilmenge von Anzeigeelementen in ihrer Intensität reduziert ist. Aufgrund dessen resultieren in der Wiedergabe der Bilddaten Intensitätsunterschiede, die maschinell sensiert werden können, um so die Information zu erfassen. Dies kann so erfolgen, dass die Bildwiedergabe der Anzeigevorrichtung mit einem Lesegerät optisch sensiert wird. Die sensierte Bildwiedergabe wird von dem Lesegerät mit den Original-Bilddaten verglichen, indem beispielsweise ein Differenzbild berechnet wird. In dem Differenzbild erscheinen die Intensitätsunterschiede. Das Differenzbild kann beispielsweise auf einer Nutzerschnittstelle der Anzeigevorrichtung ausgegeben werden. Alternativ oder zusätzlich kann das Differenzbild weiterverarbeitet werden, beispielsweise um daraus einen kryptografischen Schlüssel zu gewinnen.

Nach einer Ausführungsform der Erfindung haben die Anzeigeelemente der ersten und zweiten Teilmengen die gleiche Farbe. Bei einer Ausführung der Anzeigevorrichtung für eine farbliche Wiedergabe können die ersten und zweiten Teilmengen verschiedenfarbige Anzeigeelemente beinhalten, wobei die Intensitätsreduzierung der Anzeigeelemente der zweiten Teilmenge je nach der Farbe der betreffenden Anzeigeelemente unterschiedlich sein kann.

Nach einer Ausführungsform der Erfindung ist die Anzeigevorrichtung elektrophoretisch ausgebildet. Die Anzeigeelemente der zweiten Teilmenge haben jeweils eine geringere Anzahl elektrophoretischer Partikel.

Ausführungsformen der Erfindung sind besonders vorteilhaft, da zum Beispiel Personalisierungsinformationen in der Anordnung der Anzeigeelemente codiert werden können. Bei den Personalisierungsinformationen kann es sich zum Beispiel um eine Seriennummer des Dokuments, persönliche Angaben zu dem Träger des Dokuments und/oder biometrische Informationen, wie zum Beispiel Fingerabdruckdaten oder Iris-Scan-Daten handeln. Alternativ oder zusätzlich kann durch das Layout der Anzeigeelemente ein Sicherheitsmerkmal gegeben sein. Ferner können die Personalisierungsinformationen auch Angaben zu dem Kraftfahrzeug beinhalten, insbesondere bei Ausbildung des Dokuments als elektronisches Kraftfahrzeugkennzeichen.

Mit Hilfe der über das Layout der Anzeigeelemente codierten Information kann die Anzeigevorrichtung des Dokuments authentifiziert werden. Dadurch ist ein Schutz gegen Manipulationen oder Fälschungen des Dokuments gegeben. Insbesondere kann ein erfindungsgemäßes Dokument nicht dadurch nachgebildet werden, dass eine handelsübliche Anzeigevorrichtung in einen Dokumentenkörper integriert wird.

Nach einer Ausführungsform der Erfindung beinhaltet die Anordnung der Anzeigelemente ein digitales Wasserzeichen, durch welches die Information codiert ist.

Digitale Wasserzeichen sind an sich aus dem Stand der Technik bekannt und werden üblicherweise drucktechnisch auf ein Dokument aufgebracht, wie es zum Beispiel aus DE 199 00 856 C2, EP 0 490 457 B1 und EP 0 961 239 A3 an sich bekannt ist. Beispielsweise kann ein digitales Wasserzeichen durch Texturierung der Mikrotopologie der Oberfläche einer Banknote aufgebracht werden.

Nach Ausführungsformen der Erfindung werden solche an sich aus der Drucktechnik bekannten Verfahren zur Erzeugung digitaler Wasserzeichen auf die Anzeigevorrichtung angewendet, indem deren Mikrotopologie hinsichtlich der örtlichen Verteilung von Anzeigeelementen der ersten und zweiten Teilmengen variiert wird. Diese Variation kann im Bildraum oder im Frequenzraum erfolgen, wie es an sich ebenfalls aus dem Bereich drucktechnisch aufgebrachter Wasserzeichen bekannt ist.

Nach einer Ausführungsform der Erfindung beinhaltet die Anordnung der Anzeigelemente einen Barcode, insbesondere einen eindimensionalen oder einen zweidimensionalen Barcode. Nach einer Ausführungsform der Erfindung erscheint der Barcode in einem Differenzbild.

Nach einer Ausführungsform der Erfindung ist die Information nur in einem Teilbereich der Anzeigevorrichtung codiert, wohingegen der verbleibende Bereich der Anzeigevorrichtung nur Anzeigelemente einer der beiden Teilmengen aufweist. Hierdurch ist ein weiteres Sicherheitsmerkmal gegeben, da ein Fälscher nicht wissen kann, welcher Teilbereich des Layouts die Variationen aufweisen soll.

Nach einer Ausführungsform der Erfindung handelt es sich bei der Information um einen kryptographischen Schlüssel. Beispielsweise beinhaltet das Dokument einen integrierten elektronischen Schaltkreis zur Speicherung von schutzbedürftigen Daten, insbesondere biometrischen Daten eines Trägers des Dokuments. Der integrierte elektronische Schaltkreis dient zur Ausführung eines kryptographischen Protokolls und hat eine Schnittstelle zu einem Lesegerät. Beispielsweise kann der integrierte elektronische Schaltkreis als so genanntes Funketikett ausgebildet sein, welches auch als RFID-Tag oder RFID Chip bezeichnet wird.

Die Schnittstelle kann kontaktbehaftet, kontaktlos oder als so genanntes Dual-Mode-Interface ausgebildet sein. Die Schnittstelle kann auf einer elektrischen, kapazitiven, induktiven, magnetischen, optischen oder einer anderen physikalischen Kopplungsmethode beruhen. Für kontaktlose Kopplung über eine Antenne, kann diese beispielsweise als Spule, Dipol oder in Form von kapazitiven Flächen ausgebildet sein. Die Kommunikation mit dem Lesegerät kann über ein RFID-Verfahren erfolgen.

Für den Zugriff auf die in dem integrierten elektronischen Schaltkreis des Dokuments gespeicherten Daten muss das Lesegerät zunächst den kryptographischen Schlüssel von der Anzeigevorrichtung erfassen. Mit Hilfe dieses kryptographischen Schlüssels wird dann das kryptographische Protokoll ausgeführt. Die erfolgreiche Ausführung des kryptographischen Protokolls kann dann eine hinreichende oder notwendige Bedingung für ein Auslesen der Daten durch das Lesegerät sein. Ergänzend können weitere Sicherheitsvorkehrungen zum Schutz der Daten gegen unberechtigtes Auslesen vorgesehen sein, wie zum Beispiel nach einem Basic Access Control (BAC)- oder einem Extended Access Control (EAC)-Verfahren, wie es von der internationalen Luftfahrtbehörde (ICAO) spezifiziert ist.

Zum Lesen des Dokuments der Erfindung kommt ein Lesegerät Einsatz. Das Lesegerät hat optische Sensormittel zur Erfassung einer Bildwidergabe der Anzeigevorrichtung des Dokuments, also beispielsweise zur Erfassung von Variationen der räumlichen Anordnung der Anzeigeelemente der ersten und zweiten Teilmengen der Anzeigevorrichtung.

Nach einer Ausführungsform hat das Lesegerät eine Schnittstelle zu einer entsprechenden Schnittstelle des Dokuments, insbesondere eine RFID-Schnittstelle. Ferner hat das Lesegerät Mittel zur Ausführung eines kryptographischen Protokolls. Ein Zugriff des Lesegeräts auf in dem Dokument gespeicherte Daten kann nur dann erfolgen, wenn das Lesegerät zuvor einen kryptographischen Schlüssel von der Anzeigevorrichtung optisch erfasst, um auf dieser Basis zusammen mit dem Dokument das kryptographische Protokoll auszuführen.

Das Lesegerät ist zur Erfassung des Dokuments eines vorbeifahrenden Transportmittels ausgebildet; bei dieser Ausführungsform ist das Dokument beispielsweise als elektronisches Kraftfahrzeugkennzeichen ausgebildet. Das Lesegerät kann z.B. zur Erfassung eines Fahrzeugparameters, eines Fahrparameters oder eines Gebührenstatus des Kraftfahrzeugs dienen, insbesondere zur Durchführung von Verkehrskontrollen, Abgaskontrollen und/oder Gebührenkontrollen.

Hergestellt wird das Dokument durch ein Verfahren mit den folgenden Schritten: Zurverfügungstellung einer Anzeigevorrichtung, die eine Menge gleich aufgebauter ansteuerbarer Anzeigeelemente beinhaltet, die bei einer vorgegebenen Ansteuerung eine erste Intensität aufweisen, Zuordnung der Anzeigeelemente zu einer ersten und einer zweiten Teilmenge, Modifizierung der Anzeigeelemente der zweiten Teilmenge, so dass jedes Element der zweiten Teilmenge bei derselben vorgegebenen Ansteuerung eine zweite Intensität aufweist, wobei die zweite Intensität geringer als die erste Intensität ist, und wobei durch die Auswahl der Anzeigeelemente eine Information codiert ist, Zurverfügungstellung eines Dokumentenkörpers, Integration der Anzeigevorrichtung in den Dokumentenkörper.

Nach einer Ausführungsform der Erfindung erfolgt die Modifizierung der Anzeigeelemente der zweiten Teilmenge durch einen Alterungsvorgang.

Es ist an sich aus dem Stand der Technik bekannt, dass Anzeigeelemente bei ihrer Benutzung einer Alterung unterliegen. Diese Alterung ist nach dem Stand der Technik unerwünscht, so dass hierzu im Stand der Technik Kompensationsmaßnahmen vorgeschlagen werden, vgl. insbesondere US-Patent 7,224,332, US 6,501,230. Ferner sind auch Verfahren zur Alterung von Anzeigeelementen bekannt, um die Qualität einer Anzeigevorrichtung zu erhöhen (vgl. US 6,926,573 und US 4,412,155).

Ausführungsformen der Erfindung machen sich das Phänomen der Alterung der Anzeigeelemente zunutze, um zielgerichtet eine Information in die Anzeigevorrichtung einzubringen, indem nämlich nur eine Auswahl von deren Anzeigeelementen einer induzierten Alterung unterzogen wird. Dies kann dadurch erfolgen, dass diese Anzeigeelemente mit einem elektrischen Strom oder einer elektrischen Spannung beaufschlagt werden, die zu einer beschleunigten Alterung führt. Alternativ oder zusätzlich können die Anzeigeelemente der zweiten Teilmenge mit einer Strahlung beaufschlagt werden, um die Alterung zu induzieren, wie z. B. mit UV-Licht oder Laserstrahlung.

Nach einer Ausführungsform der Erfindung ist die Anzeigevorrichtung elektrophoretisch ausgebildet.

Aus dem Stand der Technik sind elektrophoretische Anzeigevorrichtungen an sich bekannt. Beispielsweise werden zwei Arten verschieden elektrisch geladener und verschieden gefärbter Partikel in eine Mikrokapsel oder eine Mikrosphäre so eingebracht, dass sich die Partikel durch Anliegen eines elektrischen Feldes bewegen können. Eine elektrophoretische Anzeigevorrichtung kann auch so ausgebildet sein, dass sich elektrisch geladene Partikel einer Farbe in einer Flüssigkeit einer anderen Farbe innerhalb einer geprägten Mikrostruktur bewegen können. Entsprechende elektrophoretische Anzeigevorrichtungen sind unter anderem bekannt aus EP 1 500 970 A1, DE 60107396 T2, DE 69824746 T2 und WO/2006/103605.

Zur Bildung der zweiten Teilmenge werden elektrophoretische Anzeigeelemente der Anzeigevorrichtung ausgewählt. Beispielsweise wird jedes Anzeigeelement durch eine Kavität gebildet, welche elektrophoretische Partikel beinhaltet. Die ausgewählten Anzeigeelemente, die die zweite Teilmenge bilden sollen, werden mit einer Strahlung beaufschlagt, um einen gewissen Anteil der elektrophoretischen Partikel in der Kavität unwirksam zu machen.

Nach einer Ausführungsform der Erfindung führt die Strahlung zu intra- oder intermolekulen Reaktionen bei den elektrophoretischen Partikeln . Im Falle einer intramolekularen Reaktion kann die Strahlung zum Beispiel eine Umlagerung oder eine Fragmentierung anregen, sodass Form und oder Struktur des Molekül verändert werden. Bei einer intermolekularen Reaktion kann die Strahlung chemische Reaktionen zischen dem Partikel und den Molekülen in dessen unmittelbarer Umgebung auslösen, zum Beispiel Oxidations- oder Additionsreaktionen.

Nach einer Ausführungsform der Erfindung handelt es sich bei der Strahlung um ultraviolettes (UV) Licht, sichtbares (VIS) Licht und / oder infrarotes (IR) Licht. Als erfindungsgemäße Strahlungsquellen können zum Beispiel Halogenlampen, UV-Lampen, Bogenlampen, Quecksilberlampen, Hochdrucklampen, Gasentladungslampen, Barriereentladungslampen, Plasma, thermische Strahler, Elektronenstrahlröhre mit Konverterschicht, Dioden und / oder Laser eingesetzt werden. Erfindungsgemäß können auch Filter, diffraktive oder reflektive Optiken eingesetzt werden, so dass einzelne Wellenlängen, Wellenlängenbereiche oder kontinuierliche Spektren der Lichtquellen zur Ausbleichung verwendet werden.

Im Weiteren werden Ausführungsform der Erfindung mit Bezugnahme auf die Zeichnungen näher erläutert. Es zeigen:
- Fig. 1: ein Blockdiagramm einer ersten Ausführungsform eines erfindungsgemäßen Dokuments,
- Fig. 2a: eine schematische Draufsicht auf eine Anzeigevorrichtung,
- Fig. 2b: die in der Fig. 2a gezeigte Anzeigevorrichtung nach Modifizierung der Anzeigeelemente,
- Fig. 3: ein Blockdiagramm einer weiteren Ausführungsform eines erfindungsgemäßen Dokuments.

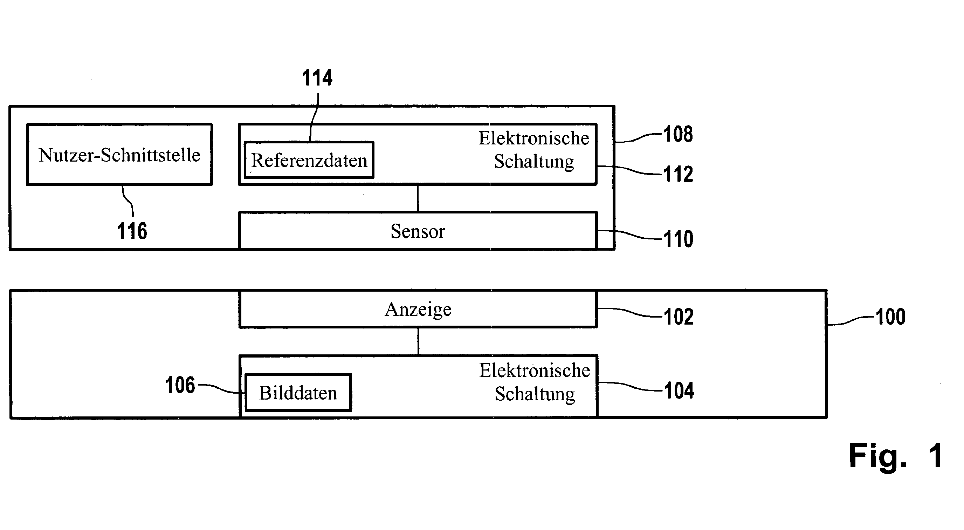

Die Fig. 1 zeigt ein Dokument 100 mit einer in den Dokumentenkörper des Dokuments 100 integrierten Anzeige 102 und einer elektronischen Schaltung 104 zur Ansteuerung der Anzeige 102. Die Anzeige 102 beinhaltet eine Vielzahl von Anzeigeelementen, die beispielsweise matrixförmig angeordnet sein können.

Die elektronische Schaltung 104 beinhaltet einen Speicher 106 für die Speicherung von Bilddaten. Die elektronische Schaltung 104 kann auf die Bilddaten in dem Speicher 106 zugreifen, um die Anzeige 102 zur Wiedergabe der Bilddaten anzusteuern.

Die Anzeige 102 ist so ausgebildet, dass ihre Anzeigeelemente im Prinzip gleich aufgebaut sind, wie es bei einer üblichen Matrixanzeige der Fall ist. Einige der Anzeigeelemente der Anzeige 102 sind aber so modifiziert, dass sie bei gleicher Ansteuerung eine geringere Intensität aufweisen als die nicht modifizierten Anzeigeelemente. Durch die nicht modifizierten Anzeigeelemente wird eine erste Teilmenge und durch die modifizierten Anzeigeelemente eine zweite Teilmenge der Anzeigeelemente der Anzeige 102 gebildet. Aufgrund der räumlichen Verteilung der Anzeigeelemente der zweiten Teilmenge in der Ebene der Anzeige 102 wird ein Muster gebildet. Dieses Muster kann durch ein Lesegerät 108 von der Anzeige 102 erfasst werden.

Das Lesegerät 108 hat einen optischen Sensor 110, wie z. B. einen CCD-Sensor oder einen optischen Scanner. Der Sensor 110 ist dazu ausgebildet, die von der Anzeige 102 erzeugte Bildwiedergabe zu erfassen.

Der Sensor 110 ist mit einer elektronischen Schaltung 112 des Lesegeräts 108 verbunden. Die elektronische Schaltung 112 hat einen Speicher 114 in dem Referenzdaten gespeichert sind. Ferner hat das Lesegerät 108 eine Nutzerschnittstelle 116.

Falls das Muster der Anzeige 102 ein Sicherheitsmerkmal für eine Echtheitsprüfung des Dokuments 100 bildet, kann die Nutzerschnittstelle 116 so ausgebildet sein, dass diese ein akustisches oder optisches Signal ausgibt, je nachdem ob das Dokument 100 die Echtheitsprüfung bestanden hat oder nicht. Wenn das Muster der Anzeige 102 hingegen Personalisierungsinformationen beinhaltet, kann die Nutzerschnittstelle 116 so ausgebildet sein, dass sie ein Display aufweist, auf dem die Personalisierungsinformation angezeigt wird.

Das Lesegerät 108 kann auch eine Schnittstelle zu einem Computer oder einem Netzwerk aufweisen, um die von der Anzeige 102 erfasste Information weiterzuleiten.

Für die Prüfung der Echtheit des Dokuments 100 kann wie folgt vorgegangen werden:

Die elektronische Schaltung 104 greift auf die Bilddaten des Speichers 106 zu und steuert damit die Anzeige 102 an, so dass die Bilddaten wiedergegeben werden. Diese Wiedergabe wird von dem Sensor 110 des Lesegeräts 108 erfasst und die daraus resultierenden Daten werden in die elektronische Schaltung 112 eingegeben. Die elektronische Schaltung 112 vergleicht diese Daten mit den Referenzdaten des Speichers 114. Bei hinreichender Übereinstimmung gilt das Sicherheitsmerkmal als erfüllt und ein entsprechendes Signal wird über die Nutzerschnittstelle 116 ausgegeben. Bei dieser Ausführungsform sind die aufgrund der Modifizierung der Anzeigeelemente der zweiten Teilmenge zu erwartenden Intensitäten in den Referenzdaten berücksichtigt, d.h. die Referenzdaten beinhalten die jeweils zu erwartenden Intensitäten der Anzeigeelemente, wobei es sich hierbei um absolute oder relative Intensitätswerte handeln kann.

In einer alternativen Ausführungsform kann es sich bei den Referenzdaten des Speichers 114 um eine Kopie der Bilddaten des Speichers 106 handeln. Die elektronische Schaltung 112 berechnet dann ein Differenzbild aus den von dem Sensor 110 erfassten Bilddaten und den Referenzdaten des Speichers 114. In dem Differenzbild treten die Intensitätsunterschiede der Anzeigeelemente der ersten und zweiten Teilmengen der Anzeige 102 zutage. Dieses Differenzbild kann über die Nutzerschnittstelle 116 ausgegeben werden. Alternativ oder zusätzlich kann das Differenzbild weiterverarbeitet werden, insbesondere wenn es sich bei dem Differenzbild um einen Barcode handelt.

Bei der Information, die in dem Speicher 106 gespeichert ist und auf der Anzeige 102 wiedergegeben wird, kann es sich um ein Kraftfahrzeugkennzeichen handeln und/oder um einen Fahrzeugparameter und/oder einen Gebührenstatus. Bei dieser Ausführungsform ist das Dokument 100 als elektronisches KraftfahrzeugKennzeichen ausgebildet, welches an einem Kraftfahrzeug angebracht ist oder welches einen integralen Bestandteil des Kraftfahrzeugs bildet.

Beispielsweise kann die elektronische Schaltung 104 eine Schnittstelle zu einem Kraftfahrzeug-Elektronikgerät aufweisen, welches die auszugebende Information an die Schnittstelle der elektronischen Schaltung 104 in regelmäßigen oder unregelmäßigen Zeitabständen sendet. Bei dem Kraftfahrzeug-Elektronikgerät kann es sich beispielsweise um eine sogenannte Electronic Control Unit (ECU) handeln. Das Kraftfahrzeug-Elektronikgerät kann über ein Kraftfahrzeug-Bussystem mit der elektronischen Schaltung 104 vernetzt sein, um über das Kraftfahrzeug-Bussystem die auszugebende Information zu übertragen.

Beispielsweise kann das Kraftfahrzeug-Elektronikgerät zur Erfassung eines Fahrzeug-Parameters dienen, und zwar auf der Basis von Sensorsignalen. Beispielsweise dient ein Sensor zur Erfassung eines aktuellen Abgaswerts des Kraftfahrzeugs. Dieser aktuelle Abgaswert wird in Form einer Information von dem Kraftfahrzeug-Elektronikgerät an die elektronische Schaltung 104 übertragen, sodass der Abgaswert über die Anzeige 102 ausgegeben wird. Entsprechend kann für weitere Fahrzeugparameter, wie zum Beispiel die Geschwindigkeit, den aktuell von dem Kraftfahrzeug erzeugten Lärmpegel oder andere Umwelt- und/oder sicherheitsrelevante Fahrzeugparameter verfahren werden.

Alternativ oder zusätzlich ist das Kraftfahrzeug-Elektronikgerät zur Bestimmung eines Gebührenstatus ausgebildet. Beispielsweise wird durch das Kraftfahrzeug-Elektronikgerät festgestellt, ob eine erforderliche Gebühr, wie zum Beispiel eine Mautgebühr, eine Steuer oder eine Abgasgebühr, für das Kraftfahrzeug entrichtet worden ist oder zu entrichten ist. Eine entsprechende Information, die den Gebührenstatus angibt, wird von dem Kraftfahrzeug-Elektronikgerät an die elektronische Schaltung 104 ausgegeben, sodass diese Information über die Anzeige 102 ausgegeben wird.

Dementsprechend kann das Lesegerät 108 zur Erfassung der Information, die über die Anzeige 102 ausgegeben wird, von dem stehenden und/oder von dem fahrenden Kraftfahrzeug ausgebildet sein. Das Lesegerät 108 kann über ein Netzwerk mit einem zentralen Servercomputer verbunden sein, in dem die von der Anzeige 102 erfasste Information ausgewertet wird.

Bei dieser Ausführungsform kann eine Aktualisierung des amtlichen Kennzeichens dadurch erfolgen, dass eine Aktualisierung des Speichers 106 vorgenommen wird, beispielsweise indem Daten, die das aktualisierte amtliche Kennzeichen beinhalten, von dem Kraftfahrzeug-Elektronikgerät über das Kraftfahrzeug-Bussystem an die elektronische Schaltung 104 gesendet werden, welches den Speicher 106 dann mit den empfangenen Daten überschreibt.

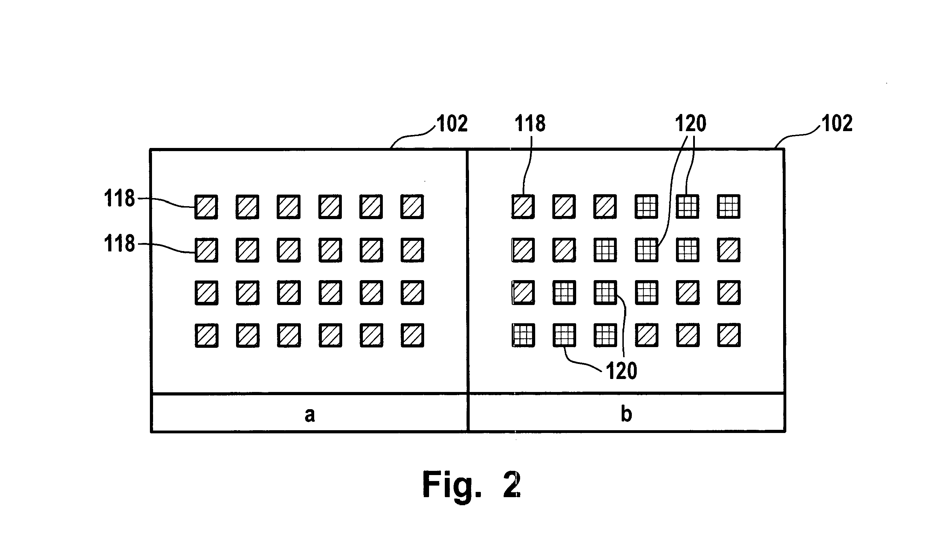

Die Fig. 2a zeigt schematisch eine Draufsicht der Anzeige 102 der Fig. 1. Bei der Anzeige 102 handelt es sich um eine Matrix-Anzeige mit matrixförmig angeordneten Anzeigeelementen 118, die prinzipiell gleich aufgebaut sind und ein prinzipiell gleiches Ansteuerverhalten aufweisen.

In die Anzeige 102 wird durch Modifizierung einiger der Anzeigeelemente 118 eine Information eingebracht. Durch diese Information wird die Anzeige 102 individualisiert oder personalisiert. Beispielsweise kann es sich bei der Information um ein Muster, Wappen, Siegel oder dergleichen handeln. Alternativ oder zusätzlich kann es sich bei der Information um eine Personalisierungsinformation eines Trägers des Dokuments 100 handeln, wie z. B. persönliche Angaben oder ein biometrisches Merkmal, wie z. B. Fingerabdruckdaten. Die Information kann in Form eines digitalen Wasserzeichens im Bild- oder Frequenzraum eingebracht werden.

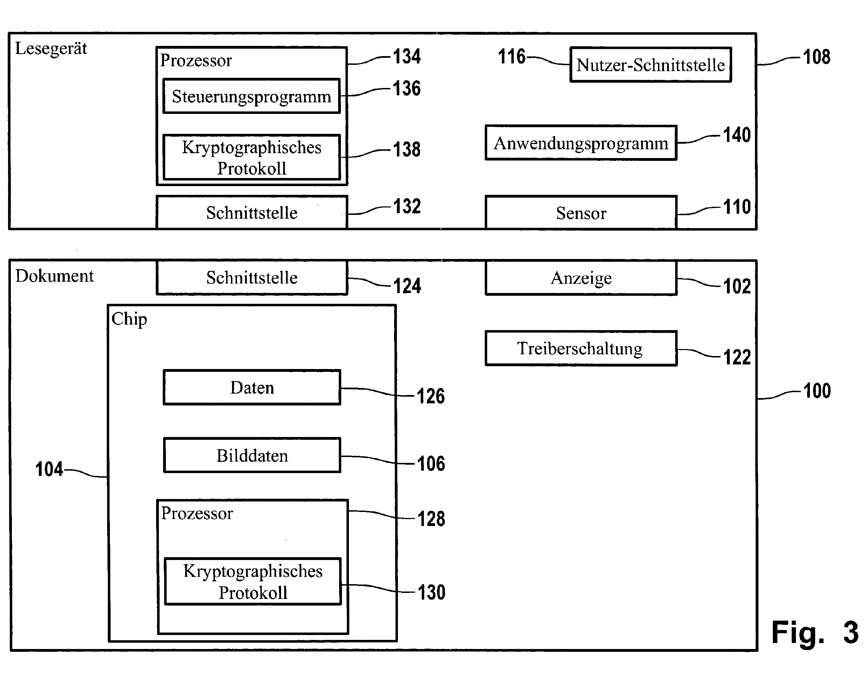

Bei der Information handelt es sich um einen kryptografischen Schlüssel, der zur Authentifizierung des Lesegeräts und zur Prüfung dessen Zugriffsberechtigung verwendet werden kann, was nachfolgend mit Bezugnahme auf die Ausführungsform der Fig. 3 noch näher erläutert wird.

Die Modifizierung einer Teilmenge der Anzeigeelemente 118 kann so erfolgen, dass diese einer beschleunigten Alterung durch Beaufschlagung mit einem Spannungspuls oder einem Strompuls ausgesetzt werden. Alternativ oder zusätzlich können die ausgewählten Anzeigeelemente 118 mit einer Strahlung beaufschlagt werden. Das Ergebnis der Modifizierung zeigt schematisch die Fig. 2b. Wie in der Fig. 2b dargestellt, erhält man durch Modifizierung einiger der Anzeigeelemente 118 der Anzeige 102 die modifizierten Anzeigeelemente 120, die in der hier betrachteten Ausführungsform in einer diagonalen Linie angeordnet sind. Durch diese diagonale Linie kann ein Sicherheitsmerkmal gegeben sein oder eine andere Information codiert sein. Bei gleicher Ansteuerung haben die Anzeigeelemente 120 eine geringere Intensität als die Anzeigeelemente 118. Dieser Intensitätsunterschied kann so gering sein, dass er mit bloßem Auge nicht wahrnehmbar ist.

Die Fig. 3 zeigt eine Ausführungsform des Dokuments 100 bei der die Information, die in der Anordnung der Anzeigeelemente 118 und 120 der Anzeige 102 codiert ist aufgrund der geringen Intensitätsunterschiede nicht durch einen Benutzer visuell wahrnehmbar ist, sondern nur mit dem Lesegerät 108 maschinell erfassbar ist.

Das Dokument 100 hat eine Treiberschaltung 122 zur Ansteuerung der Anzeige 102. Die elektronische Schaltung 104 des Dokuments 100 ist hier als Chip, insbesondere als RFID-Chip, ausgebildet. Die elektronische Schaltung 104 ist mit einer Schnittstelle 124 zur Kommunikation mit dem Lesegerät 108 verbunden. Die Schnittstelle 124 kann beispielsweise ein oder mehrere Antennenwindungen, die in einem Randbereich des Dokuments 100 verlaufen, aufweisen.

Die Schaltung 104 hat einen elektronischen Speicher 126 zur Speicherung von schutzbedürftigen Daten. Bei den schutzbedürftigen Daten kann es sich beispielsweise um biometrische Daten des Trägers des Dokuments 100, wie z. B. Fingerabdruckdaten, Iris-Scan-Daten oder dergleichen handeln.

In dem Speicher 106 sind dagegen Bilddaten gespeichert, die zur Wiedergabe durch die Anzeige 102 vorgesehen sind. Bei den Bilddaten kann es sich um ein oder mehrere Gesichtsbilder des Trägers des Dokuments, textuelle Informationen, einen Barcode oder ein Testbild zur Überprüfung der Authentizität der Anzeige 102 handeln. Die Schaltung 104 hat ferner einen Prozessor 128 zur Ausführung von Programminstruktionen 130, durch die die das Dokument 100 betreffenden Schritte eines kryptografischen Protokolls implementiert werden.

Das Lesegerät 108 hat einen optischen Sensor 110 zur Erfassung der Bildwiedergabe der Anzeige 102. Bei dem optischen Sensor 110 kann es sich um einen CCD-Sensor oder einen Scanner handeln.

Das Lesegerät 108 hat ferner eine Schnittstelle 132, die der Schnittstelle 124 des Dokuments 100 entspricht. Beispielsweise ist also die Schnittstelle 132 für eine RFID-Kommunikation mit dem Dokument 100 bzw. dessen Schaltung 104 ausgebildet.

Das Lesegerät 108 hat zumindest einen Prozessor 134 zur Ausführung eines Steuerungsprogramms 136 sowie von Programminstruktionen 138, durch die die das Lesegerät 108 betreffenden Schritte des kryptografischen Protokolls implementiert werden. Das Lesegerät 108 kann ferner zur Ausführung eines Anwendungsprogramms 140 dienen. Das Anwendungsprogramm 140 kann auch von einem anderen Computersystem ausgeführt werden, welches mit dem Lesegerät 108 verbunden ist.

Die Anzeige 102 ist in der hier betrachteten Ausführungsform so ausgebildet, dass es sich bei der in der Anordnung der Anzeigeelemente der ersten und zweiten Teilmengen codierten Information um einen kryptografischen Schlüssel für die Durchführung des kryptografischen Protokolls handelt. Insbesondere kann es sich hierbei um einen symmetrischen oder um einen asymmetrischen kryptografischen Schlüssel handeln.

Zum Zugriff auf die Daten des Speichers 126 erfasst das Lesegerät 108 zunächst mittels seines optischen Sensors 110 die Bildwiedergabe der Anzeige 102. Hierzu wird der Sensor 110 entsprechend von dem Steuerungsprogramm 136 angesteuert. Das Steuerungsprogramm 136 extrahiert die in der Bildwiedergabe beinhaltete Information durch Analyse der erfassten Intensitätswerte der Anzeigeelemente. Beispielsweise kann die Information in Form eines digitalen Wasserzeichens vorliegen, als Barcode oder dergleichen. Auf diese Art und Weise erhält das Steuerungsprogramm 136 Kenntnis des kryptografischen Schlüssels.

Das Steuerungsprogramm 136 startet daraufhin die Ausführung der Programminstruktionen 138, so dass das kryptografische Protokoll zwischen dem Lesegerät 108 und dem Dokument 100 mit Hilfe des kryptografischen Schlüssels durchgeführt wird. Beispielsweise handelt es sich bei dem kryptografischen Protokoll um ein Challenge-Response-Verfahren.

Das Challenge-Response-Verfahren kann beispielsweise so ablaufen, dass das Lesegerät 108 zunächst eine Anforderung der Daten an die Schnittstelle 124 des Dokuments 100 sendet. Daraufhin wird die Ausführung der Programminstruktionen 130 gestartet. Hierdurch wird seitens des Dokuments 100 z. B. eine Zufallszahl generiert, die mit einem Referenzwert des kryptografischen Schlüssels symmetrisch verschlüsselt wird, so dass ein Chiffrat resultiert. Die verschlüsselte Zufallszahl, d.h. das Chiffrat, wird von der Schnittstelle 124 des Dokuments 100 an die Schnittstelle 132 des Lesegeräts 108 gesendet.

Durch Ausführung der Programminstruktionen 138 wird seitens des Lesegeräts 108 das von dem Dokument 100 empfangene Chiffrat mit Hilfe des zuvor aus der Bildwiedergabe der Anzeige 102 gewonnenen kryptografischen Schlüssels entschlüsselt. Das Resultat der Entschlüsselung wird von der Schnittstelle 132 an die Schnittstelle 124 des Dokuments 100 gesendet.

Mit Hilfe der Programminstruktionen 130 wird dann seitens des Dokuments 100 geprüft, ob das Ergebnis der Entschlüsselung des Chiffrats, welche das Dokument von dem Lesegerät 108 empfangen hat, identisch ist mit der initial durch das Dokument 100 erzeugten Zufallszahl. Wenn dies der Fall ist, stimmt der Referenzwert des kryptografischen Schlüssels, der in den Programminstruktionen 130 beinhaltet ist, oder auf den diese zugreifen können, mit dem aus der Bildwiedergabe der Anzeige 102 durch das Lesegerät 108 erfassten kryptografischen Schlüssel überein, wodurch die Authentizität des Dokuments 100 und die Zugriffsberechtigung des Lesegeräts 108 gegeben ist.

Das Dokument 100 überträgt daraufhin die von dem Lesegerät 108 angeforderten Daten des Speichers 126 von der Schnittstelle 124 zu der Schnittstelle 132. Diese Daten können von dem Steuerungsprogramm 136 an das Anwendungsprogramm 140 für eine Weiterverarbeitung übertragen werden. Beispielsweise werden die Daten auf einer Bildschirmmaske ausgegeben.

Je nach Ausführungsform kann in dem Lesegerät 108 ein vorgegebenes Referenzbild gespeichert sein. Dieses wird als Testbild von dem Lesegerät an das Dokument übertragen, indem die Referenzbilddaten an die Schnittstelle 124 gesendet werden. Das Testbild wird dann von der Anzeige 102 des Dokuments 100 wiedergegeben und die Wiedergabe wird von dem Sensor 110 des Lesegeräts 108 erfaßt. Durch Vergleich der von der Wiedergabe der Anzeige 102 erfaßten Intensitätswerte mit den Referenzbilddaten kann das Lesegerät die Information, beispielsweise also den kryptographischen Schlüssel, gewinnen. Hierzu kann es erforderlich sein, dass das Lesegerät auf einen sog. Masterkey zugreift, aus dem mit Hilfe der Information nach einem vorgegebenen Algorithmus der kryptogrphische Schlüssel abgeleitet wird. Der Masterkey kann auf einer Chipkarte gespeichert sein, durch welche der Algorithmus durchgeführt wird.

Bevor die Daten aus dem Speicher 126 an das Lesegerät 108 übertragen werden, können weitere Überprüfungen erforderlich sein, wie z.B. nach einem EAC Verfahren.

### Bezugszeichenliste

- 100: Dokument
- 102: Anzeige
- 104: Schaltung
- 106: Speicher
- 108: Lesegerät
- 110: Sensor
- 112: Schaltung
- 114: Speicher
- 116: Nutzerschnittstelle
- 118: Anzeigeelement
- 120: Anzeigeelement
- 122: Treiberschaltung
- 124: Schnittstelle
- 126: Speicher
- 128: Prozess
- 130: Programminstruktionen
- 132: Schnittstelle
- 134: Prozess
- 136: Programminstruktionen
- 138: Programminstruktionen
- 140: Anwendungsprogramm

## Patentansprüche

1. Dokument mit einer Integrierten Anzeigevorrichtung (102), die eine Menge gleich aufgebauter strom- oder spannungs-ansteuerbarer Anzeigeelemente beinhaltet, wobei die Menge eine erste und eine zweite Teilmenge von Anzeigeelementen aufweist, wobei jedes Anzeigeelement (118) der ersten Teilmenge bei einer vorgegebenen Strom- oder Spannungsansteuerung eine erste Intensität hat, und wobei Jedes Anzeigeelement (120) der zweiten Teilmenge bei derselben vorgegebenen Ansteuerung eine zweite Intensität hat, wobei die zweite Intensität geringer als die erste Intensität ist, und wobei durch die Anordnung der Anzeigeelemente der ersten und zweiten Teilmengen eine Information codiert ist, wobei es sich bei der Information um einen kryptografischen Schlüssel handelt, wobei das Dokument einen integrierten elektronischen Schaltkreis (104) mit einem Speicher (126) zur Speicherung von Daten und Mittel (130) zur Ausführung eines kryptografischen Protokolls beinhaltet, und mit einer Schnittstelle (124) zu einem Lesegerät (108), wobei ein Zugriff des Lesegeräts auf die Daten über die Schnittstelle die Ausführung des kryptografischen Protokolls mit Hilfe des kryptografischen Schlüssels voraussetzt.

2. Dokument nach Anspruch 1, wobei die Anzeigeelemente der Menge die gleiche Farbe aufweisen.

3. Dokument nach Anspruch 1 oder 2, wobei die Anzeigeelemente der zweiten Teilmenge gegenüber den Anzeigeelementen der ersten Tellmenge gealtert sind.

4. Dokument nach einem der vorhergehenden Ansprüche, wobei die Anzeigevorrichtung einen Bereich aufweist, in dem keine Information codiert ist, so dass dieser Bereich nur Anzeigeelemente der ersten oder der zweiten Teilmenge aufweist.

5. Dokument nach einem der vorhergehenden Ansprüche, wobei die Schnittstelle zum Empfang einer auf der Anzeigevorrichtung wiederzugebenden Information ausgebildet ist.

## Claims

1. A document with an integrated display device (102), which contains a quantity of identically structured current- or voltage-controllable display elements, wherein the quantity has a first and a second sub-quantity of display elements, wherein each display element (118) of the first sub-quantity has a first intensity in the case of a predefined current or voltage control, and wherein each display element (120) of the second sub-quantity has a second intensity in the case of the same predefined control, wherein the second intensity is lower than the first intensity, and wherein, as a result of the arrangement of the display elements of the first and second sub-quantities, a piece of information is coded, wherein the information is a cryptographic key, wherein the document contains an integrated electronic circuit (104) with a memory (126) for storing data and means (130) for executing a cryptographic protocol, and comprising an interface (124) to a reader (108), wherein access by the reader to the data via the interface presupposes the execution of the cryptographic protocol with the aid of the cryptographic key.

2. The document according to Claim 1, wherein the display elements of the quantity have the same colour.

3. The document according to Claim 1 or 2, wherein the display elements of the second sub-quantity are aged compared with the display elements of the first sub-quantity.

4. The document according to one of the preceding claims, wherein the display device has a region in which no information is coded, such that this region has only display elements of the first or the second sub-quantity.

5. The document according to one of the preceding claims, wherein the interface is configured to receive a piece of information to be reproduced on the display device.

## Revendications

1. Document avec un dispositif d'affichage intégré (102) contenant une quantité d'éléments d'affichage activables par le courant ou la tension et structurés de la même façon, dans lequel la quantité comporte une première quantité partielle et une deuxième quantité partielle d'éléments d'affichage, dans lequel chaque élément d'affichage (118) de la première quantité partielle présente une première intensité lors d'une activation par courant ou par tension, et dans lequel chaque élément d'affichage (120) de la deuxième quantité partielle présente une deuxième intensité lors de la même activation prédéfinie, dans lequel la deuxième intensité est inférieure à la première intensité, et dans lequel l'agencement des éléments d'affichage des première et deuxième quantités partielles permet de coder une information, dans lequel l'information est une clé cryptographique, dans lequel le document contient un circuit électronique intégré (104) avec une mémoire (126) pour l'enregistrement de données et des moyens (130) pour l'exécution d'un protocole cryptographique, et avec une interface (124) vers un dispositif de lecture (108), dans lequel un accès du dispositif de lecture aux données par le biais de l'interface présuppose l'exécution du protocole cryptographique à l'aide de la clé cryptographique.

2. Document selon la revendication 1, dans lequel les éléments d'affichage de la quantité présentent la même couleur.

3. Document selon la revendication 1 ou 2, dans lequel les éléments d'affichage de la deuxième quantité partielle sont vieillis par rapport aux éléments d'affichage de la première quantité partielle.

4. Document selon l'une des revendications précédentes, dans lequel le dispositif d'affichage présente une zone dans laquelle aucune information n'est codée, de sorte que cette zone ne présente que des éléments d' affichage de la première ou de la deuxième quantité partielle.

5. Document selon l'une des revendications précédentes, dans lequel l'interface est conçue pour la réception d'une information à reproduire sur le dispositif d'affichage.
